# EUROPEAN PATENT APPLICATION

(11) **EP 4 772 972 A1**
(43) Date of publication of application: **08.07.2026**
(21) Application number: 25223885.2
(22) Date of filing: 16.12.2025
(51) Int. Cl.: G06F 3/01

(54) **SYSTEM AND METHOD FOR DIRECTIONAL CONTROL**

(30) Priority: 05.01.2025 US 202563741930 P
(71) Applicant: Doublepoint Technologies Oy, 00150 Helsinki (FI)
(72) Inventor: HU, Jamin, 00150 Helsinki (FI); NIOCHE, Aurélien, 00150 Helsinki (FI); KLAR, Ville, 00150 Helsinki (FI); TUOMINEN, Lauri, 00150 Helsinki (FI)
(74) Representative: Laine IP Oy

(57) **Abstract**

A wearable apparatus is provided comprising a wearable IMU configured to measure a user, a mounting component, a controller comprising a processing core, at least one memory including computer program code; the at least one memory and the computer program code being configured to, with the at least one processing core, cause the apparatus at least to: receive data from the wearable IMU, the data comprising movement information related to a user movement, the user movement comprising a relative motion between the user's thumb and a finger of the user, wherein during at least part of the movement the surface of the thumb contacts the surface of the finger, classify, using a gesture classifier and based at least in part on the movement information, the movement as a candidate gesture, wherein the candidate gesture is at least one of: a left directional movement, a right directional movement, a up directional movement, or a down directional movement, and output the classified candidate gesture.

## Description

### FIELD

This disclosure provides a system and method for detecting and measuring directional gestures, in particular in the field of wearable applications, for example extended reality applications. More specifically, the present disclosure provides a gesture classifier which classifies gestures based on user movement information.

### BACKGROUND

Apparatuses are more complex than ever, but controlling them may still be difficult. Wearable devices may be bulky, task-specific and prevent the user from accomplishing other tasks.

### SUMMARY OF THE INVENTION

The invention is defined by the features of the independent claims. Some specific embodiments are defined in the dependent claims.

According to a first aspect of the present invention, there is provided a wearable apparatus comprising a wearable IMU configured to measure a user, a mounting component, a controller comprising a processing core, at least one memory including computer program code; the at least one memory and the computer program code being configured to, with the at least one processing core, cause the apparatus at least to: receive data from the wearable IMU, the data comprising movement information related to a user movement, the user movement comprising a relative motion between the user's thumb and a finger of the user, wherein during at least part of the movement the surface of the thumb contacts the surface of the finger, classify, using a gesture classifier and based at least in part on the movement information, the movement as a candidate gesture, wherein the candidate gesture is at least one of: a left directional movement, a right directional movement, a up directional movement, or a down directional movement, and output the classified candidate gesture.

According to a second aspect of the present invention, there is provided a method for classifying user gestures, the method comprising: measuring, by a wearable IMU configured to measure a user, a user movement, providing data comprising movement information related to the user movement to a gesture classifier, classifying, using the gesture classifier, based at least in part on the movement information, the movement as a candidate gesture, wherein the candidate gesture is at least one of: a left directional movement, a right directional movement, a up directional movement, or a down directional movement, and outputting the classified candidate gesture.

According to a third aspect of the present invention, there is provided a non-transitory computer readable medium having stored thereon a set of computer readable instructions that, when executed by at least one processor, cause an apparatus to at least perform the first aspect or the second aspect.

Various embodiments of the first, the second or the third aspect may comprise at least one feature from the following bulleted list:
- wherein the wearable IMU is attached to the mounting component, wherein the mounting component is a wrist-wearable component such a strap,
- wherein the wearable IMU is attached to a mounting component, wherein the mounting component is a finger-wearable component such as a ring,
- wherein the apparatus is configured to execute a low level model, the low level model configured to activate the gesture classification when the low level model detects the user movement is being performed,
- wherein the apparatus comprises the gesture classifier, and
- wherein the apparatus comprises a gesture interpreter, wherein the classified candidate gesture is provided to the gesture interpreter as an input.

### BRIEF DESCRIPTION OF THE DRAWINGS

FIGURE 1 illustrates a schematic view of an example system in accordance with at least some embodiments of the present disclosure;
FIGURES 2A and 2B illustrate the biology of a user in accordance with at least some embodiments of the present disclosure,
FIGURES 3A, 3B and 3C illustrate schematic views of exemplary systems in accordance with at least some embodiments of the present disclosure,
FIGURES 4A and 4B illustrate schematic view of exemplary gestures in accordance with at least some embodiments of the present disclosure,
FIGURE 5 illustrates exemplary sensor data measured during a gesture in accordance with the present disclosure, and
FIGURE 6 illustrates in flowchart form an exemplary process in accordance with the present disclosure,
FIGURES 7A and 7B illustrate schematic views of exemplary systems in accordance with at least some embodiments of the present disclosure, and
FIGURE 8 illustrates a schematic view of an example system in accordance with at least some embodiments of the present disclosure.

### EMBODIMENTS

The present disclosure provides systems and methods to implement gesture detection, for example directional gesture detection, based on a user's movements. For example, a swipe movement may be performed by the user by swiping their thumb along a finger, and this movement may be classified and interpreted in order to control a controllable apparatus.

### DEFINITIONS

A gesture refers to an action performed by a user, such as an action depicting an intent for a further action. For example, a gesture refers to a movement or a combination of sequential and/or concurrent movements of an extremity or part thereof, having thereon a prescribed meaning in the context of said movement. For example, wave of the hand may be a gesture.

A directional gesture is a movement, performed by a user, which corresponds to a directional command. For example, the user may perform a leftward motion, which corresponds to a leftward command.

A directional pad or d-pad is a user interface concept. Such a pad, implemented physically and/or logically, allows the user to input directional commands to a user interface. Typically, a physical d-pad comprises left, right, up, and down buttons. Combinations of such buttons are possible, for example left+up. A logical d-pad may comprise left, right, up, and down directional commands. A logical d-pad may comprise additional commands such as left+up, left+down, right+up, right+down, up, and down directional commands.

A controllable apparatus is any suitable device for control by a user. A controllable apparatus may comprise at least one of the following, for example: a video game console, a personal computer, a laptop, a virtual reality headset, an augmented reality device, a television, a media player, a streaming device, an audio system, a monitor, a projector, an interactive display, a drone, a remote-controlled vehicle, an electric vehicle, an industrial machine, a medical device, a camera, a wearable device, or a robotic apparatus.

A controllable apparatus may comprise a user interface (UI), which is configured so that the user may control the apparatus. The user interface may be at least one of: a graphical user interface, a tactile user interface, a logical user interface. For example, a media device such as a smartphone may have a user interface which allows controlling the volume without touching the device, for example the volume may be controlled via controls on wireless headphones.

A control device may be used by a user to control at least one controllable apparatus. The control device may be configured to translate the user's commands into UI commands accepted by the controllable device. For example, the user may perform a gesture, which is measured by a sensor connected to the control device. Based on the measured sensor data, the control device may classify the gesture as at least one directional gesture, or cause the gesture to be so classified. Based on the classified directional gesture, the control device may interpret the gesture, or cause the classified gesture to be so interpreted. The control device may be configured to output, for example to the controllable device, at least one of the classified gesture and/or the interpreted gesture, for example as an UI command.

A mounting component refers to component which is configured to be worn by a user and also attach to or provide a housing for further components. An apparatus comprising a mounting component is thus a wearable apparatus. A mounting component may be any of the following: a strap, a band, a torc, a ring, a wristband, a bracelet, a glove, glasses, goggles, a helmet, a cap, a hat, a head band, or similar head gear. Wrist-wearable mounting components may be any of the following: a strap, a band, a wristband, a bracelet, a torc. Finger-wearable mounting components may be any of the following: a ring, a finger sleeve, a thimble. The mounting component may be attached to and/or formed by another apparatus such as a smartwatch, or form part of a larger apparatus such as a gauntlet, or a headset. In some embodiments, a strap, a band, and/or a wristband has a width of 2 to 5 cm, preferably 3 to 4 cm, more preferably 3 cm. The mounting component may be attached to and/or formed by another apparatus such as a XR controller.

At least some embodiments are configured to measure the position and/or movement of the user by using an inertial measurement unit, IMU. The IMU may be configured to provide position information of the apparatus. The IMU may be termed an inertial measurement unit sensor. The IMU may comprise at least one of the following: a multi-axial accelerometer, a gyroscope, a magnetometer, an altimeter, a barometer. The IMU may comprise a magnetometer as the magnetometer provides an absolute reference for the IMU. A barometer, which is usable as an altimeter, may provide additional degrees of freedom to the IMU.

A wearable IMU is a IMU suitable for wearing by a user. The IMU will typically be attached to a mounting component. Alternatively, the IMU may comprise a mounting component, which the user may use to removably attach the IMU to themselves. The IMU will typically be powered by a battery which is attached to the mounting component.

The IMU is configured to send a sensor data stream, for example to an internal or external controller. Said sensor data stream comprises, for example, at least one of the following: multi-axial accelerometer data, gyroscope data, and/or magnetometer data. The IMU and a controller may be located on the same PCB (printed circuit board). Changes in the IMU data reflect, for example, movements and/or actions by the user, and thus such movements and/or actions may be measured by using the IMU data.

Signal characteristics may be used to make determinations of underlying physical activity measured by the sensor providing the signal. For example, IMU signal data may be analyzed for characteristics which inform what gesture the user has made, or is making. Such characteristics may include at least one of: intensity, amplitude, oscillation frequency, signal variance, signal magnitude area, entropy, correlation between different signals, jerk, dominant axis, zero-crossing rate. Such characteristics may include at least one of temporal and/or frequency domain features, for example time-domain metrics comprising at least one of peak acceleration, velocity magnitude, and duration of motion events; and/or frequency-domain analysis comprising identification of periodic and/or oscillatory motion patterns, wherein the patterns may be associated with specific predetermined gestures.

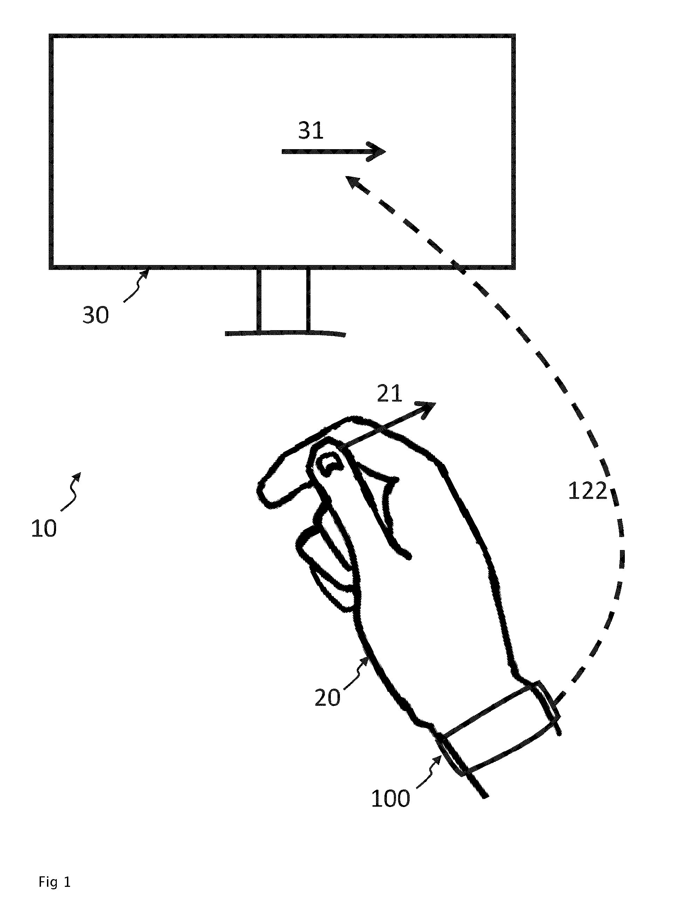

FIGURE 1 illustrates an exemplary embodiment of a system 10 in accordance with at least some embodiments of the present disclosure. In figure 1, system 10 comprises at least control device 100 and controllable apparatus 30. Controllable apparatus 30 may be any suitable controllable apparatus, for example any of the devices discussed within this disclosure.

The user 20 may use control device 100 to control controllable apparatus 30. For example, the control may comprise transmitting a UI, user interface, command from control device 100 to controllable apparatus 30. In the figure, the user 20 is making a left-to-right swipe gesture 21. Said gesture is measured by control device 100, worn on the user's wrist in this example. The control device 25 is configured to transmit a UI command 122 corresponding to gesture 21 to the controllable device 30. Controllable device 30 executes command 31 (a right-ward motion), which corresponds to gesture 21 and UI command 122. For example, controllable device 30 may change the channel, move a cursor to the right, or otherwise execute the command.

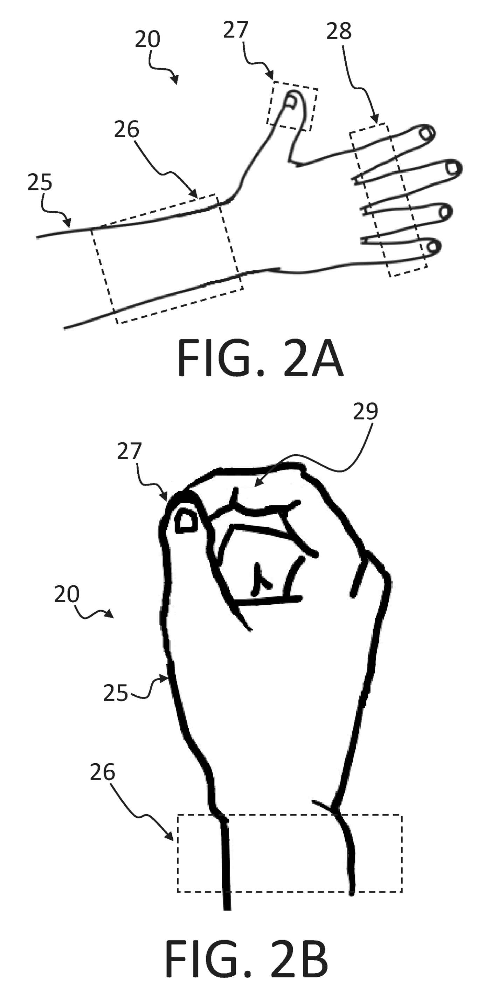

FIGURES 2A and 2B illustrate the biology of a user in accordance with at least some embodiments of the present disclosure. A user 20 has a hand 25. The user's hand may comprise several areas of interest as shown in the figures, for example wrist area 26, thumb tip 27, finger area 28, finger area 29.

The user has a wrist area 26. Wrist area 26 is suitable for wearing an apparatus, for example an apparatus 100. Importantly, such an apparatus may detect the directional user gestures from the wrist area. The wrist area 26 may comprise, for example, an area starting from a bottom end of the palm of the user and ending a few centimeters below the bottom end of the palm of the user. When the user performs an action with the hand connected to the wrist, a sensor device arranged, for example worn, in the vicinity of the wrist area 26 may detect signals such as movements of the hand muscles and/or tendons. In other words, the wrist reacts in a measurable way to gestures, and the measurements (taken with an apparatus configured according to the present disclosure) correspond to specific directional movements. Measurements may be taken continuously, for example from the wrist area, to provide sensor data which can be used by the embodiments.

Thumb tip 27 is the thumb tip of a user, defined as the distal end portion of the user's thumb. The thumb is the first digit of the hand, next to the index finger. The tip comprises a pad, which is on the other side of the thumb with respect to the thumb nail area. The surface of this pad is generally what is meant by the thumb tip in this disclosure.

Finger area 28 is the surface of any of the distal, medial and/or proximal phalanx of the user's finger, wherein said finger is on the same hand of the user as the thumb.

In figure 2B, the user's hand 25 is shown from a different perspective. In figure 2B, the user is about to make a directional gesture by contacting the thumb tip 27 to finger surface 29 and then dragging the thumb tip 27 along the surface 29 in a rightward direction.

Surface 29 is the surface of any of the distal, medial and/or proximal phalanx of the user's finger, wherein said finger is on the same hand of the user as the thumb.

The user may move the thumb with respect to the finger and/or move the finger with respect to the thumb. The measured motion is a relative motion between the finger and the thumb.

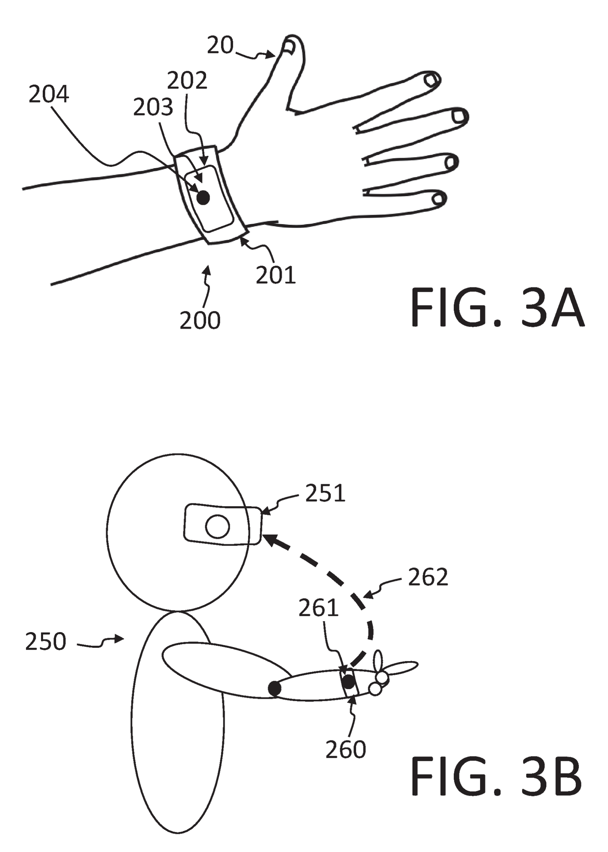

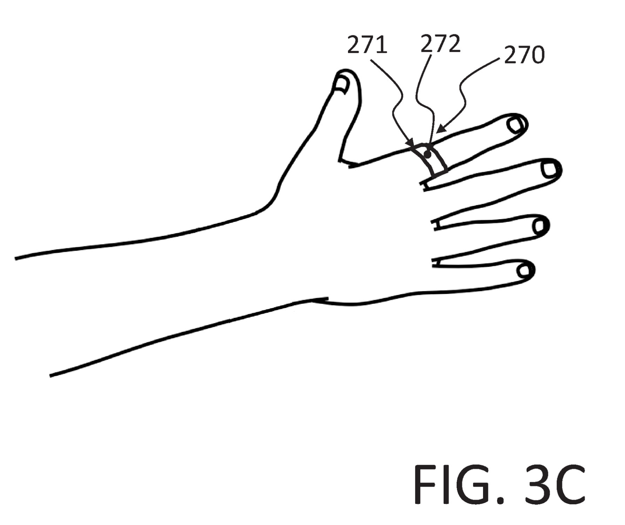

FIGURES 3A, 3B and 3C illustrate example apparatuses capable of supporting at least some embodiments of the present disclosure.

In figure 3A, apparatus 200 is shown on the wrist area of user 20. Apparatus 200 comprises mounting component 201, for example a strap. Apparatus 200 comprises a housing 202, wherein an inertial measurement unit sensor, IMU, 204 is located within the housing. Further, controller 203 may be located within the housing.

The IMU 204 may be configured to provide a sensor data stream. The providing may be within the apparatus, for example to a controller, a digital signal processor, DSP, a memory. Alternatively or additionally, the providing may be to an external apparatus. A sensor data stream may comprise one or more raw signals measured by sensors. Additionally, a sensor data stream may comprise at least one of: synchronization data, configuration data, and/or identification data. Such data may be used by the controller to compare data from different sensors, for example.

The controller 203 comprises at least one processor, and at least one memory including computer program code, and optionally data. Controller 203 may be configured to communicate with IMU 204, so as to at least receive data streams from the IMU. In other words, the controller 203 may be configured so as to cause the controller to receive at least one sensor data stream from at least one sensor, for example the IMU. The IMU signal frequency may be from 50 Hz to 150 Hz, for example 100 Hz. In some embodiments, the controller 203 is a minimal controller, configured only to transmit data corresponding to the IMU 204 data stream to another device for processing.

Alternatively or additionally, the controller 203 may perform more complex tasks, as discussed hereafter. The controller 203 may be configured to perform preprocessing on at least one received sensor data streams, wherein the preprocessing may comprise the preprocessing disclosed herein. The controller 203 may be configured to process the received at least one sensor data stream from the at least one sensor. The controller 203 may be configured to: receive data from the IMU 204, the data comprising movement information related to a user movement, the user movement comprising a relative motion between the user's thumb, for example thumb tip 27 and a finger surface 29 of the user, wherein during at least part of the movement the surface of the thumb contacts the surface of the finger, classify, using a gesture classifier and based at least in part on the movement information, the movement as a candidate gesture, wherein the candidate gesture is at least one of: a left directional movement, a right directional movement, a up directional movement, or a down directional movement, and output the classified candidate gesture. The controller 203 may comprise the gesture classifier in the form of a trained machine learning model, for example at least one neural network.

The controller 203 may be configured to generate, based on the characteristics of the processed sensor data stream, at least one user interface UI event and/or command. The controller may be configured to transmit the UI command based on the output gesture. The UI command may be at least one of: a directional movement, adjusting a slider, raising or lowering volume, and/or media controls.

The controller 203 may be configured so that the movement information comprises at least one data signal within a time window, and wherein the classifier is configured to classify the gesture based on the signal characteristics within said time window, for example so that the classifier is configured to classify the gesture as a candidate gesture and optionally any subsequent gestures based on at least one signal intensity within said time window. For example, if an accelerometer signal increases over a certain threshold (for example 10%-100% increase) within a short time (for example less than 50% to 10% of the time window), then that would qualify as a suitable signal intensity for gesture classification. The time window may be predetermined, or set by the controller 203. A suitable time window may be from 50 milliseconds to 500 milliseconds, in particular 400 milliseconds.

The controller 203 may be configured so that the gesture classifier comprises a trained machine learning model, for example a trained neural network, wherein the trained machine learning model is trained to classify gestures as candidate gestures based on movement information. Such a trained machine learning model may comprise transformers, a recurrent neural network, and/or a convolutional neural network. The model may be trained using supervised training (labeled) data, augmented data, foundational models. The trained machine learning model may be configured to further learn from the user's gestures when using controller 203.

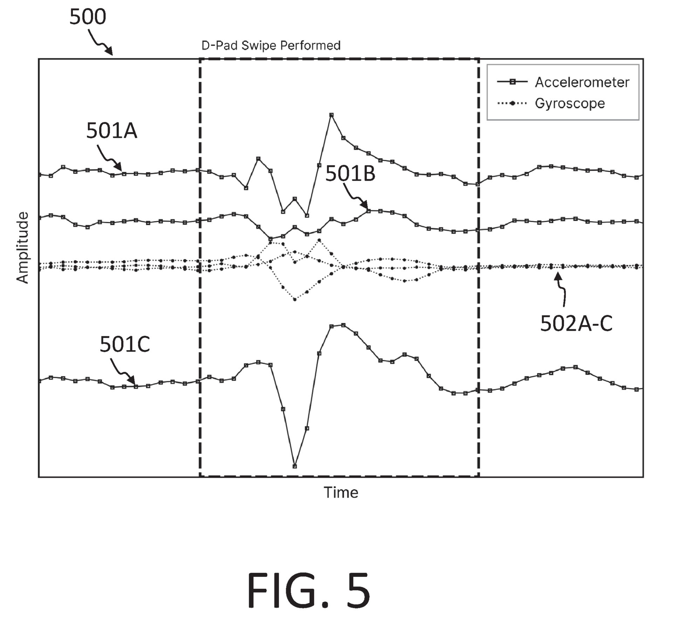

The controller 203 may be configured so that the gesture classifier comprises a rule-based model, wherein the rule-based model is trained to classify gestures as candidate gestures based on movement information according to rules, the rules being related to signal characteristics, for example signal intensity, of the movement information. Signals may be observed in Figure 5, which may display typical signals of gestures in accordance with the present disclosure.

The apparatus 200 may further comprise a communication unit or interface, for example located within the housing. Such a unit may comprise, for example, a wireless and/or wired transceiver.

The controller 203 may be configured to execute a low level model, the low level model configured to activate the gesture classification when the low level model detects the user movement is being performed. In other words, the low level model may wake the gesture classifier when a gesture is detected by the low level model. Detection, by the low level model, may be based on an analysis of the IMU signal. The low level model may be constantly executed by the controller, as it does not need as much computational or electrical power as the classifier. The low level model is responsive enough to wake the classifier in time to classify a gesture being performed, even if the classifier was not awake when the gesture was begun by the user. Optionally, the gesture classification may be activated manually or based on a condition. Such a condition may comprise at least one of the following: a user voice command, a user wake gesture, a UI event (for example a phone notification), shaking the controllable device, or shaking the controller.

The controller 203 may be configured to perform onboard processing, said onboard processing comprising preprocessing of the IMU signals, gesture classification and gesture interpretation.

FIGURE 3B illustrates an example system 250 comprising a wrist apparatus 260 and a head apparatus 251, wherein said head apparatus comprises a controller comprising a processor, memory and communications interface. The memory may comprise instructions that, when executed by the processor, allow the head apparatus 251 and/or the controller to determine a directional gesture performed by a user based on a data stream 262 from a wrist-wearable apparatus 260. The determination may be done similar in a similar manner as performed by controller 203, discussed above. The data stream 262 from the wrist-wearable apparatus 260 may be based at least in part on data from wrist-wearable IMU 261. The head apparatus 251 is shown being worn by a user.

FIGURE 3C illustrates an example system comprising a wearable apparatus 270, wherein said wearable apparatus comprises a ring-shaped mounting component 271. Apparatus 270 further comprises an IMU 272, either within the mounting component or attached thereto. Apparatus 270 may comprise a minimal controller as discussed above. Additionally or alternatively, apparatus 270 may comprise a controller comprising a processor, memory and communications interface. The controller may be configured to: receive data from the IMU 272, the data comprising movement information related to a user movement, the user movement comprising a relative motion between the user's thumb, for example thumb tip 27 and a finger surface 29 of the user, wherein during at least part of the movement the surface of the thumb contacts the surface of the finger, classify, using a gesture classifier and based at least in part on the movement information, the movement as a candidate gesture, wherein the gesture is at least one of: a left directional movement, a right directional movement, a up directional movement, or a down directional movement, and output the classified candidate gesture.

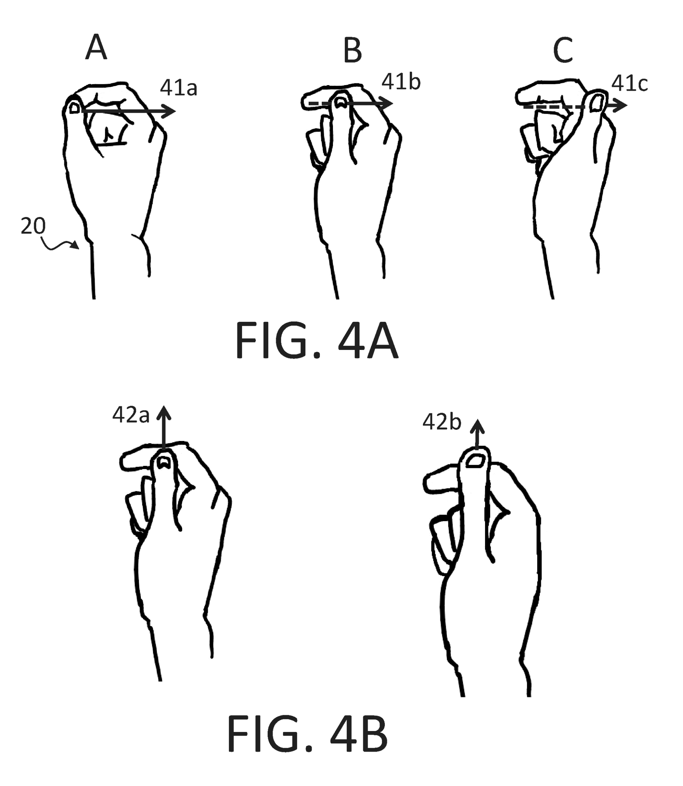

FIGURES 4A and 4B illustrate exemplary gestures according to the present disclosure. In figure 4A, user 20 is making a gesture of moving their thumb tip from the left to the right while contacting the surface of the finger. In other words, the user is swiping right using their thumb on the surface of the finger. The first image on the left (labelled A) shows the initial situation, where the user has just placed the thumb tip on the index finger surface in order to swipe. This initial contact is labelled 41a.

In the second image in the sequence (the middle image labelled B) the user is in the middle of making the swiping gesture. This in-progress gesture is labelled 41b.

In the final image of the sequence (the right-hand image labelled C) the user has completed the swiping gesture. The user's thumb tip has travelled from left to right relative to the surface of the user's finger. The completed gesture is labelled 41c.

In figure 4B, user 20 is making a gesture of moving their thumb tip from the down to up (referring to the plane of the finger surface) while contacting the surface of the finger. In other words, the user is swiping up using their thumb on the surface of the finger. The first image on the left shows the initial situation, where the user has just placed the thumb tip on the index finger surface in order to swipe. This initial contact is labelled 42a.

In the second image of the sequence (the right-hand image) the user has completed the swiping gesture. The user's thumb tip has travelled from down to up relative to the surface of the user's finger. In other words, the thumb tip has travelled away from the user's wrist. The completed gesture is labelled 42b.

Further gestures are possible according to this disclosure, for example the gestures disclosed in the tables below.

**Table 1. Directional gestures**

| ***Gesture*** | ***Description*** |
|---|---|
| *D-pad up* | Moving from down to up; upward arrow |
| *D-pad down* | Moving from up to down; downward arrow |
| *D-pad left* | Moving from right to left; leftward arrow |
| *D-pad right* | Moving from left to right; rightward arrow |

The user may also make further gestures, which an apparatus in accordance with the present disclosure may be configured to detect. The user may perform a "fingertip tap", wherein the user taps the thumb tip and a finger tip together. The user may also perform a "finger press", where the user presses the thumb tip to the finger surface. As used herein, the duration of these gestures may vary, but the in the fingertip tap, the fingertip is used, and in the finger press the finger surface is used instead. Various combinations of the gestures of table 1 with the finger tap and/or finger press are presented in table 2.

**Table 2. Expanded gestures**

| ***Gesture*** | ***Description*** |
|---|---|
| *Fingertip tap* | Tapping the thumb tip and the finger tip together, a click |
| *Double fingertip tap* | Tapping the thumb tip and the finger tip together twice, a double click |
| *Finger Press* | Pressing the thumb tip and the finger surface together, a click |
| *Double Finger Press* | Pressing the thumb tip and the finger surface together twice, a double click |
| *D-pad + fingertip tap* | A directional gesture from e.g. table 1, followed by a fingertip tap |
| *D-pad + double fingertip tap* | A directional gesture from e.g. table 1, followed by a double fingerprint tap |
| *D-pad + finger press* | A directional gesture from e.g. table 1, followed by a finger press |
| *Fingertip tap + D-pad* | A fingertip tap, followed by a directional gesture from e.g. table 1 |
| *Double fingertip tap + D-pad* | A double fingertip tap, followed by a directional gesture from e.g. table 1 |
| *Finger press +D-pad* | A finger press, followed by a directional gesture from e.g. table 1 |
| *Double finger press + D-pad* | A double finger press, followed by a directional gesture from e.g. table 1 |

Gestures, such as 41a-41c and 42a-42b and those listed in the tables herein, may be performed with any wrist and arm orientation. The controllers of the present disclosure may be configured to provide gestures with respect to either relative (= hand coordinate system) or absolute ( = world coordinate system) coordinates.

In other words, if the user has their hand pointing downwards, and relative coordinates are used, performing action 42a-42b will still be determined as an upwards swipe, despite the notional downward (earth-ward) motion of the thumb tip. In contrast, when absolute coordinates are used, moving the thumb tip downwards in that action will be interpreted as a downwards action.

The absolute/relative setting may be adjusted by any of the user, the controller, the controllable device. For example, the controller may adjust it based on at least one of: the magnetometer reading of the IMU, UI information provided from the controller.

Using the relative setting is beneficial for many situations. For example, where the user is performing a sport activity, for example running, and wants to switch songs on their media device (e.g. smartphone), then the user would not want to orient their hand in a specific orientation just to control the media volume. In this example, the user may swipe up to increase the volume, and since relative setting is used, this can be accomplished whatever the hand orientation is in world coordinates.

Using the relative setting allows for different classifier configurations. In an embodiment, the classifier may be configured to detect only left and right swipes by the thumb tip along the surface of the finger. The user may then achieve up and down swipes by rotating their wrist so that the swipe (in world coordinates) is a vertical motion. The classifier outputs either left or right (or the logical equivalents), but the interpreter is able to interpret the gesture according to world coordinates, for example by using the magnetometer information. Because magnetometers are typically slower (provide information at a lower frequency), such a configuration is computationally beneficial and thus saves power and improves accuracy, especially when performing the classification onboard a wrist-wearable device, or a ring-like device.

Using the absolute setting is also beneficial to reduce user confusion, for example in many visual UI systems and/or XR applications.

FIGURE 5 illustrates exemplary sensor data measured during a gesture in accordance with the present disclosure. The sensor diagram 500 shows amplitude on the vertical axis and time on the horizontal axis. Sensor diagram 500 comprises accelerometer signals 501A, 501B and 501C. Sensor diagram 500 comprises gyroscope signals 502A, 502B and 502C.

The dotted box within diagram 500 indicates a time window where the user, wearing an apparatus in accordance with this disclosure, has performed a d-pad swipe gesture. In other words, the user has contacted the tip of his thumb to the surface of his finger and moved the thumb tip along the surface of the finger to perform a swiping gesture. Within the time window, it can be seen that the sensor data reflects the swiping motion, so that a classifier is able to detect such a motion being performed. The time window can be, for example, from 50 to 500 milliseconds, in particular 400 milliseconds.

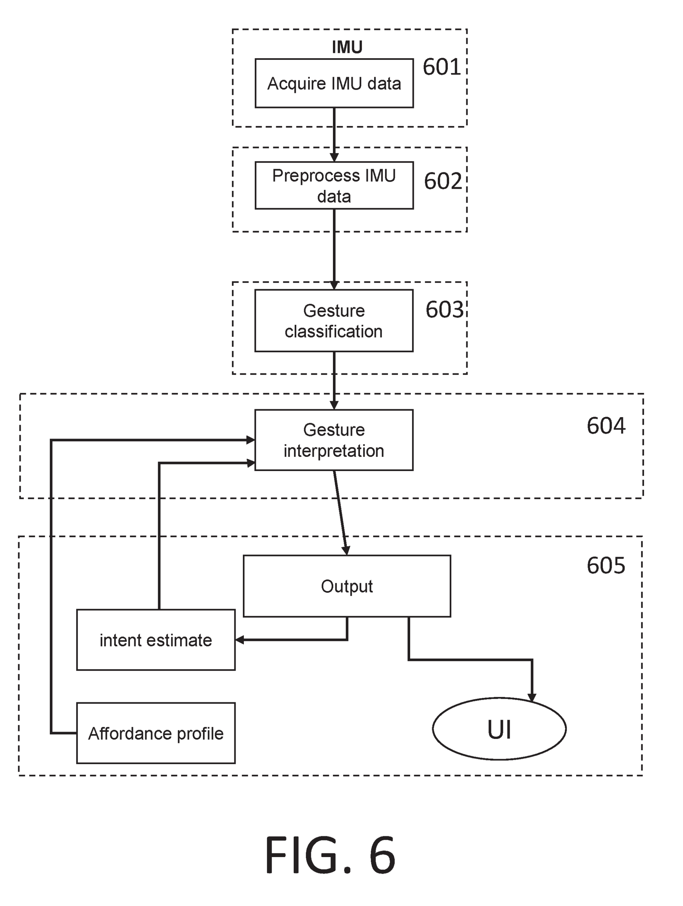

FIGURE 6 illustrates in flowchart form an exemplary process capable of supporting at least some embodiments of the present disclosure. The process may be performed wholly or in part by any of systems 100, 200, 250, 270, 300, 400, 700. The actions and steps of the flowchart may be performed in least in part by an apparatus, for example an apparatus such as controller 203, 301,401, for example.

At the top of Fig. 6, the IMU sensor apparatus is shown. At least some actions, such as providing data, may be performed by a sensor, such as one of sensors 204, 261, 271, 303, 403, for example.

The flowchart of Figure 6 comprises illustrative but non-limiting phases 601, 602, 603, 604, and 605. Actions need not necessarily be within a phase. Further, the actions within phases 601, 602, 603, 604 and 605 need not be performed concurrently.

Phase 601 comprises data acquisition. In this phase the controller, for example the controller 203, receives data, for example data streams, from an apparatus, for example the wrist sensor apparatus. The sensor data may comprise, for example, IMU data. The sensor data may comprise movement information relating to a user movement, the user movement comprising a relative motion between the user's thumb (27) and a finger (29) of the user, wherein during at least part of the movement the surface of the thumb contacts the surface of the finger.

As seen in the flowchart, after sensor data is received from the sensor apparatus, said received sensor data may be optionally preprocessed in phase 602. Preprocessing of the input data may comprise, for example, normalizing, scaling, and/or filtering the input data.

Regarding the IMU, the IMU may be adjusted before or after the preprocessing. Such adjustment may be self-referential, e.g. the sensor is adjusted or calibrated according to a stored reference value or a known good (e.g. magnetic north for the IMU).

Phase 603 comprises gesture classification. Gesture classification comprises classifying, based on the sensor data comprising movement information, the user movement as a gesture. The gesture is selected from a predefined list of gestures. In particular, the predefined list of gestures comprises at least one of: a left directional movement, a right directional movement, a up directional movement, or a down directional movement. The gesture classification phase may output a ranked list of probabilities corresponding to candidate gestures, based at least in part on the received data in the preceding phases. For example, the ranked list may look like table 3.

**Table 3. Exemplary list of candidate gestures with probability**

| ***Gesture name*** | ***Probability*** |
|---|---|
| *D-pad up* | *90* |
| *D-pad down* | *50* |
| *D-pad left* | *20* |
| *D-pad right* | *15* |

While exemplary directions "up", "down", "left", "right" are discussed in table 3, the gesture classifier may be configured to provide only logical identifiers, for example "direction 1", "direction 2", etc. The actual directions may be inferred, depending on the absolute or relative setting, by the controller at a later stage, for example using the gesture interpretation. Further, the actual directions may be also determined by a separate apparatus, for example where gesture interpretation is performed by said separate apparatus, for example the controllable apparatus.

Phase 604 comprises gesture interpretation. In this phase, the output of the gesture classification is used to determine what the performed gesture was. The interpretation may comprise determining if the classification output is an acceptable result. For example, the interpretation phase may comprise evaluating the output of the gesture classifier against a threshold. If the output exceeds the threshold, then the output may be accepted as an output gesture. Further, the gesture interpreter may be configured to adjust the evaluation, for example raise or lower the threshold, based on at least one of an affordance profile and/or a user intent estimate.

An affordance profile relates to the user interface. An affordance is a possible action the user may perform in the context of the user interface. An affordance profile may comprise a list of the possible actions the user may perform. If the user interface, for example in a user interface state, does not provide the user with the option to perform a certain action, then the gesture interpreter may be configured to rank that certain action as less likely to be performed. For example, if the user has scrolled to the end of a video, in some cases it is not possible that the scrolling will continue in the same direction.

A user intent estimate relates to the user interface. The user intent estimate is based on the repetitive and/or logical nature of most user interfaces. For example, when the user is shown a list, often said user will want to scroll down the list. Then, the user may want to either exit the list or scroll back up the list, or select an item on the list. An user intent estimate may comprise a list of the probable actions the user may perform, for example ranked by probability. Each user intent estimate may be related to a certain user interface and/or certain user interface state. For example, the user intent estimate may change depending on the application being executed by the controllable apparatus. A intent estimate may comprise an indication of future actions, and/or information related to a set of suitable actions with respect to contextual information. For example, the scene may provide information related to a previous action (for example "playing a video") and an expected future action (for example "pausing a video", "adjusting volume").

The affordance profile and/or the user intent estimate may be may be provided to gesture interpreter by the UI and/or by other sources, such as controller itself.

The gesture interpreter may be configured to provide actual gesture directions in either hand coordinates and/or world coordinates, especially if the output of the gesture classification comprises logical identifiers. The controller may be configured to utilize the magnetometer data to provide the actual directions in world coordinates.

Phase 605 comprises controlling at least one controllable apparatus. In this phase, the output of the gesture interpretation is used to control the controllable apparatus, for example via a UI. The outputted interpreted gesture may be provided via an API, for example. The outputted interpreted gesture may be provided for example in a format such as a boolean value and/or a HID, human interface device, frame. As seen in the figure, the phase 605 may providing the intent estimate and/or the affordance profile to the gesture interpreter before or after the output is received from the interpreter.

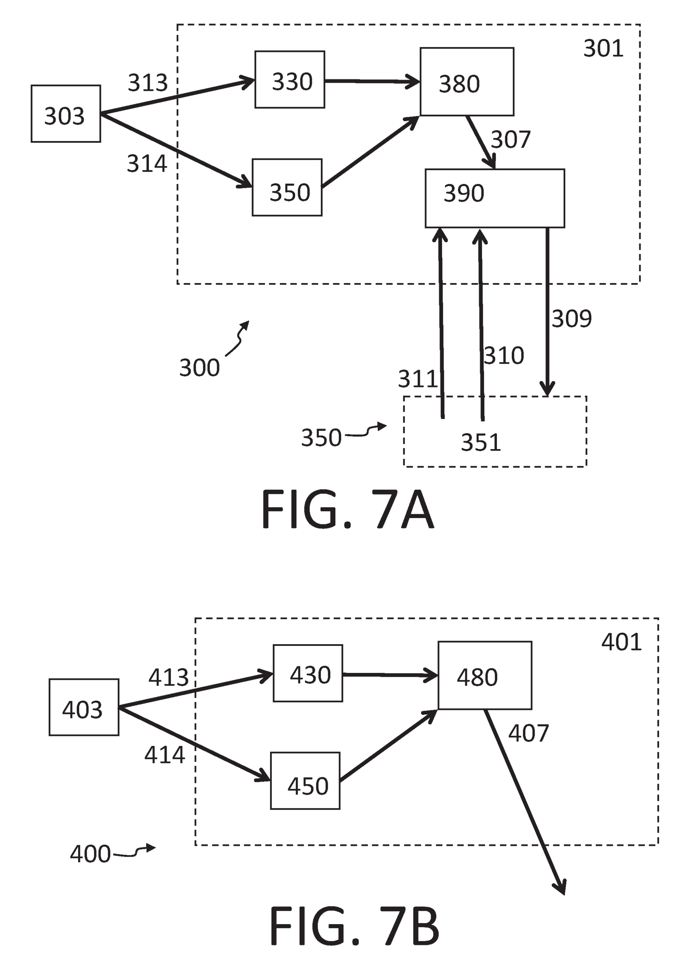

FIGURE 7A illustrates system 300 capable of supporting at least some embodiments of the present disclosure. Said system may be similar or identical to system 100 or 200, except when stated otherwise.

In Figure 7A, an exemplary schematic view of system 300 is shown. As can be appreciated from Figure 7A, the system 300 comprises the wrist-wearable IMU 303, and controller 301. Controller 301 is shown in the figure represented by the dotted line. As shown in the figure, controller 301 may comprise, for example in the memory of the controller, at least the preprocessing blocks 350, 330, and gesture classifier 380. Controller 301 may comprise gesture interpreter 390. System 300 may be configured so that at least one of: the gesture interpretation or the UI command generation, is performed by controller 301.

IMU 303 is configured to transmit sensor data, for example in one or more sensor data streams, for example, the sensor data streams 313 and 314, respectively. The sensor data streams may be received by the controller 301. For example, sensor data stream 313 may comprise or consist of gyroscope data and sensor data stream 314 may comprise or consist of accelerometer data. The sensor data may be provided as a single stream, which the controller then separates. The sensor data streams 313, 314 may be optionally preprocessed.

Based at least in part on the sensor data streams 313, 314, the controller 301 may be configured to classify the gesture using gesture classifier 380. The classified gesture 307 may then be provided to gesture interpreter 390. Alternatively or additionally, the classified gesture 307 may be provided to a separate apparatus. The form of classified gesture 307 may be a ranked list of probabilities corresponding to candidate gestures, for example candidate d-pad gestures.

Controller 301 may be configured to interpret, using gesture interpreter 390, classified gesture 307. Controller 301 may output the interpreted gesture 309 to an apparatus 350 comprising UI 351. Gesture interpreter 390 may be configured to utilize at least one of intent estimate 310 or affordance profile 311 in the interpretation. Intent estimate 310 and/or affordance profile 311 may be provided to gesture interpreter 390 by the UI 351 and/or by other sources, such as controller 301 itself.

A controller, such as controller 203 or controller 301, may comprise a classifier model. Such a model may comprise at least one of: algorithms, heuristics, and/or mathematical models. Such a model may be configured to classify a gesture, based on measurements obtained from a user and provided to the model. At least one confidence value, preferably a list and/or series of confidence values, may be output by the model, an apparatus or a system, based at least in part on the classification. At least one sensor data stream, such an IMU data stream, may be directed into at least one model. Such a model may include or be a machine learning model, comprising, for example, at least one neural network, such as a feed-forward, convolutional, recurrent or graph neural network, or. The model may additionally or alternatively comprise at least one of a supervised, unsupervised or reinforcement learning algorithm.

Neural networks disclosed herein may be any of, for example, a feed-forward neural network, a convolution neural network, or a recurrent neural network, or a graph neural network. A neural network may comprise a classifier and/or regression. The neural network may apply a supervised learning algorithm. In supervised learning, a sample of inputs with known outputs is used from which the network learns to generalize. Alternatively, the model may be constructed using an unsupervised learning or a reinforcement learning algorithm. In some embodiments, the neural network has been trained so that certain signal characteristics correspond to certain user action characteristics, such as a user gesture, for example a d-pad left motion.

A classifier model may comprise, for example, at least one convolutional neural network, CNN, performing inference on the input data, for example the signals received from the sensors and/or preprocessed data. Convolutions may be performed in spatial or temporal dimensions. Features (computed from the sensor data fed to the CNN) may be chosen algorithmically or manually. A classifier model may comprise a further RNN (recurrent neural network), which may be used in conjunction with a neural network to support user action characteristic identification based on sensor data which reflects user activity.

Feature extraction from input data may be done using a feature extraction module, which may comprise a neural network, for example a convolutional neural network. User actions, such as pinching in order to select an interactable element, may be identified using long short-term memory LSTM recurrent neural network RNN, for example. A system may further incorporate a feature extraction module configured to analyze the sensor data stream and identify additional user actions beyond d-pad action. Additional user actions may be, for example, gestures disclosed in connection with table 2.

Sensitivity of a gesture classification model, for example using a neural network, may be further adjusted based on a previous gesture history of a user. Such user specific adjustment of the gesture classification model may be done by, for example, adjusting some of the early and or late layers of the neural network. The previous gesture history, comprising at least one gesture performed by the user, of the user may be stored in an apparatus, such as a wrist-wearable apparatus or, for example, in a cloud-based storage system. Such a system may be configured to adjust the sensitivity and/or accuracy of the classification machine learning model based on a previous history of the user, for example a gesture history.

In accordance with this disclosure, the training of a model may be performed, for example, using a labelled data set containing IMU motion data from multiple subjects. This data set may be augmented and expanded using synthesized data. Depending on the employed model construction technique, the sequence of computational operations that compose the model may be derived via backpropagation, Markov-Decision processes, Monte Carlo methods, or other statistical methods. The model construction may involve dimensionality reduction and clustering techniques.

Gesture interpretation may utilize user intent information. The user intent estimate is based on the repetitive and/or logical nature of most user interfaces. A user intent estimate may comprise a list of the probable actions the user may perform, for example ranked by probability. Each user intent estimate may be related to a certain user interface and/or certain user interface state.

Gesture interpretation may utilize at least one affordance profile. An affordance profile may comprise a list of the possible actions the user may perform. If the user interface, for example in a user interface state, does not provide the user with the option to perform a certain action, then the gesture interpreter may be configured to rank that certain action as less likely to be performed. If, for example, a confidence level for a gesture is deemed high enough to be recognized as a gesture, but no action suitable for the gesture is available in the present UI state, such gesture may be on such occasion ranked lower or even disregarded.

The affordance profile and/or the user intent estimate may comprise interactable elements present in a scene, such as user interface UI sliders, switches and buttons, for example, in a scene information in extended reality XR.

The at least one interpreted gesture outputted by the event interpreter 390 may be received by the UI 351 within apparatus 350.

The controller may be configured to generate a confidence level of a user gesture based on the received sensor data stream. The confidence level may comprise one or more indicated probabilities in the form of percentage values associated with one or more respective user gestures. The confidence level may comprise an output layer of a neural network. The confidence level may be expressed in vector form. Such a vector may comprise a 1 x n vector, populated with the probability values of each user gesture known to the controller.

FIGURE 7B illustrates system 400 capable of supporting at least some embodiments of the present disclosure. Said system is similar to system 100, 200, or 300, except when stated otherwise.

In Figure 7B, an exemplary schematic view of system 400 is shown. As can be appreciated from Figure 7B, the system 400 comprises the wrist-wearable IMU 403, and controller 401. Controller 401 is shown in the figure represented by the dotted line. As shown in the figure, controller 401 may comprise, for example in the memory of the controller, at least the preprocessing blocks 450, 430, and gesture classifier 480.

IMU 403 may arranged or worn on a users' wrist, for example. IMU 403 is configured to transmit sensor data, for example in one or more sensor data streams, for example, the sensor data streams 413 and 414, respectively. The sensor data streams may be received by the controller 401. For example, sensor data stream 413 may comprise gyroscope data and sensor data stream 414 may comprise accelerometer data. The sensor data may be provided as a single stream, which the controller then separates. The sensor data streams 413, 414 may be optionally preprocessed.

Based at least in part on the sensor data streams 413, 414, the controller 401 may be configured to classify the gesture using gesture classifier 480. The classified gesture 407 may then be provided to a separate apparatus. The form of classified gesture 407 may be a ranked list of probabilities corresponding to candidate gestures, for example candidate d-pad gestures.

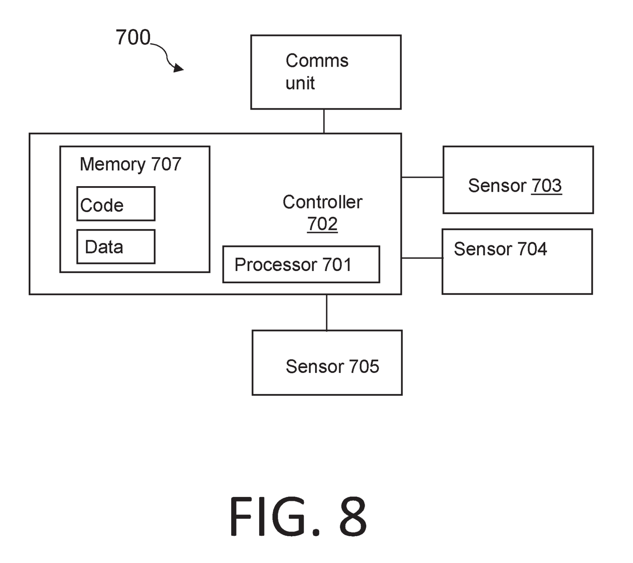

FIGURE 8 illustrates a system 700 in accordance with at least some embodiments of the present disclosure. System 700 may comprise a trained machine learning model, for example a neural network. System 700 may further optionally comprise at least one of the following: an IMU 703.

The system 700 comprises a controller 702 comprising at least one processor 701, and at least one memory 707 including computer program code, and optionally data. The system 700 may further comprise a communication unit or interface.

Controller 702 may be connected to at least one sensor, for example sensor 703. Controller 702 may be connected to multiple sensors simultaneously, for example sensors 703, 704 and 705. An exemplary sensor may be an IMU. Controller 702 may be connected to said sensors directly, reserving communication interface for connections to other apparatuses, for example controllable devices.

Although the system 700 is depicted as including one processor, the system 700 may include more processors. In an embodiment, the memory is capable of storing instructions, such as at least one of: operating system, various applications, models, neural networks and/or, preprocessing sequences. Furthermore, the memory may include a storage that may be used to store, e.g., at least some of the information and data used in the disclosed embodiments.

Furthermore, the processor is capable of executing the stored instructions. In an embodiment, the processor may be embodied as a multi-core processor, a single core processor, or a combination of one or more multi-core processors and one or more single core processors. For example, the processor may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an embodiment, the processor may be configured to execute hard-coded functionality. In an embodiment, the processor is embodied as an executor of software instructions, wherein the instructions may specifically configure the processor to perform at least one of the models, sequences, algorithms and/or operations described herein when the instructions are executed.

The memory may be embodied as one or more volatile memory devices, one or more non-volatile memory devices, and/or a combination of one or more volatile memory devices and non-volatile memory devices. For example, the memory may be embodied as semiconductor memories (such as mask ROM, PROM (programmable ROM), EPROM (erasable PROM), flash ROM, RAM (random access memory), etc.).

The at least one memory and the computer program code may be configured to, with the at least one processor, cause the system 700 to at least perform as follows: receive data from a wearable IMU, the data comprising movement information related to a user movement, the user movement comprising a relative motion between the user's thumb, for example the thumb tip, and a finger of the user, for example the surface of the finger, wherein during at least part of the movement the surface of the thumb contacts the surface of the finger, classify, using a gesture classifier and based at least in part on the movement information, the movement as a candidate gesture, wherein the candidate gesture is at least one of: a left directional movement, a right directional movement, a up directional movement, or a down directional movement, and output the classified candidate gesture.

Advantages of the present disclosure include the following: As per the examples discussed herein, the present disclosure provides an accurate way of implementing d-pad control using the user's thumb and finger, typically of the same hand. Especially when the IMU is located at a wrist area of the user, the IMU or any wearable device attached to it will not hinder the user's fingers, for example when typing. The ability to perform precise gesture detection based on the output of a single IMU reduces the size and complexity of the wearable control device, and has a benefit in power saving as well. Further, a smartwatch or other wearable device may be used to implement the system and method of this disclosure, so that a specialized wearable device is not necessarily required.

The embodiments disclosed herein provide a technical solution to a technical problem. One technical problem being solved is how to accurately classify gestures which involve a user's fingers, when the gestures are relatively minute and where the IMU sensor which measures said gestures may be located relatively far away, for example at the user's wrist.

The embodiments disclosed herein overcome these limitations by using computational methods and apparatuses in order to classify the gestures into at least one of a directional gesture, for example by using a trained machine learning model or a rule-based model. Other technical improvements may also flow from these embodiments, and other technical problems may be solved.

The present disclosure can also be utilized via the following clauses.
Clause 1. A wearable apparatus comprising
   - a wearable IMU configured to measure a user (20),
   - a mounting component,
   - a controller (comprising a processing core, at least one memory including computer program code;
   the at least one memory and the computer program code being configured to, with the at least one processing core, cause the apparatus at least to:
   - receive data from the wearable IMU, the data comprising movement information related to a user movement, the user movement comprising a relative motion between the user's thumb (27) and a finger (29) of the user, wherein during at least part of the movement the surface of the thumb contacts the surface of the finger,
   - classify, using a gesture classifier and based at least in part on the movement information, the movement as a candidate gesture, wherein the candidate gesture is at least one of: a left directional movement, a right directional movement, a up directional movement, or a down directional movement, and
   - output the classified candidate gesture.
Clause 2. The apparatus of clause 1, wherein the wearable IMU is arranged on the user's wrist.
Clause 3. The apparatus of clause 1 or clause 2, wherein the wearable IMU is attached to the mounting component, wherein the mounting component is a wrist-wearable component such a strap.
Clause 4. The apparatus of clause 1, wherein the wearable IMU is arranged on the user's finger.
Clause 5. The apparatus of clause 1 or clause 4, wherein the wearable IMU is attached to a mounting component, wherein the mounting component is a finger-wearable component such as a ring.
Clause 6. The apparatus of any one of the preceding clauses, wherein the controller is configured to execute a low level model, the low level model configured to activate the gesture classification when the low level model detects the user movement is being performed.
Clause 7. The apparatus of any one of the preceding clauses, wherein the controller is configured to activate the gesture classification responsive to at least one of the following: a user voice command, a user wake gesture, a UI event (for example a phone notification), or shaking the device.
Clause 8. The apparatus of any one of the preceding clauses, wherein an external apparatus comprises the gesture classifier, wherein the controller is configured to transmit the movement information to the external apparatus, and wherein optionally the controller is configured to receive the classified candidate gesture in return.
Clause 9. The apparatus of any one of the preceding clauses, wherein the controller comprises the gesture classifier.
Clause 10. The apparatus of any one of the preceding clauses, wherein the classified candidate gesture is provided as at least one of: a confidence value, a ranked list of probabilities corresponding to candidate gestures.
Clause 11. The apparatus of any one of the preceding clauses, wherein the gesture classifier comprises a trained machine learning model, for example a trained neural network, wherein the trained machine learning model is trained to classify gestures as candidate gestures based on movement information.
Clause 12. The apparatus of any one of the preceding clauses, wherein the gesture classifier comprises a rule-based model, wherein the rule-based model is trained to classify gestures as candidate gestures based on movement information according to rules, the rules being related to signal characteristics, for example signal intensity, of the movement information.
Clause 13. The apparatus of any one of the preceding clauses, wherein an external apparatus comprises a gesture interpreter, wherein the controller is configured to transmit the classified candidate gesture to the external apparatus.
Clause 14. The apparatus of any one of the preceding clauses, wherein the controller comprises a gesture interpreter, wherein the classified candidate gesture is provided to the gesture interpreter as an input.
Clause 15. The apparatus of any one of the preceding clauses, wherein the gesture interpreter is configured to adjust the determination based on at least one of an affordance profile and/or a user intent estimate.
Clause 16. The apparatus of any one of the preceding clauses wherein the output of the gesture classifier must satisfy a threshold to be accepted, by the gesture interpreter, as an interpreted gesture.
Clause 17. The apparatus of any one of the preceding clauses wherein the threshold is adjusted based on at least one of an affordance profile and/or a user intent estimate.
Clause 18. The apparatus of any one of the preceding clauses, wherein the movement information comprises at least one data signal within a time window, and wherein the classifier is configured to classify the gesture based on the signal characteristics within said time window.
Clause 19. The apparatus of any one of the preceding clauses, wherein the classifier is configured to classify the gesture and optionally any subsequent gestures based on at least one signal intensity within said time window.
Clause 20. The apparatus of any one of the preceding clauses, wherein the time window is from 50 milliseconds to 500 milliseconds, in particular 400 milliseconds.
Clause 21. The apparatus of any one of the preceding clauses, wherein the IMU signal frequency is from 50 Hz to 150 Hz, for example 100 Hz.
Clause 22. The apparatus of any one of the preceding clauses, wherein the controller is configured to transmit a UI command based on the output gesture, wherein the UI command may be at least one of: a directional movement, adjusting a slider, raising or lowering volume, and/or media controls.
Clause 23. The apparatus of any one of the preceding clauses, wherein the apparatus is configured to measure movement information where the movement comprises contact between the surface of the thumb, for example the distal and/or medial phalanx of the thumb, and the surface of the finger (for example, the distal, medial and/or proximal phalanx of the finger).
Clause 24. The apparatus of any one of the preceding clauses, wherein the gesture further comprises extended movements, such as finger tap movements (tapping the finger tip and thumb tip together), finger press movements (pressing the thumb tip to the finger surface) and/or combination swipe and/or finger tap and/or finger press.
Clause 25. The apparatus of any one of the preceding clauses, wherein the controller is further configured to use a neural network, for example a recurrent neural network, to capture gesture history and improve gesture detection.
Clause 26. The apparatus of any one of the preceding clauses, wherein the controller is further configured to perform onboard processing, said onboard processing comprising the preprocessing, the gesture classification and the gesture interpretation.
Clause 27. The apparatus of any one of the preceding clauses, wherein the IMU is a six-axis IMU comprising at least one of: magnetometer, gyroscope, or accelerometer.
Clause 28. The apparatus of any one of the preceding clauses, wherein the apparatus comprises at least one optical sensor, wherein the apparatus is configured to provide data from the optical sensor to the gesture classifier, wherein the classifying of the gesture is performed based at least in part on the provided optical sensor data.
Clause 29. The apparatus of any one of the preceding clauses, wherein a single housing comprises the controller and the IMU.
Clause 30. The apparatus of any one of the preceding clauses, wherein the controller is a smart phone and/or wherein a smart phone comprises the controller.
Clause 31. The apparatus of any one of the preceding clauses, wherein the computed motion features comprise temporal and/or frequency domain features, for example time-domain metrics comprising at least one of peak acceleration, velocity magnitude, and duration of motion events; and/or frequency-domain analysis comprising identification of periodic and/or oscillatory motion patterns, wherein the patterns may be associated with specific predetermined gestures.
Clause 32. The apparatus of any one of the preceding clauses, wherein the neural network model is a convolutional neural network comprising multiple convolutional layers for feature extraction.
Clause 34. The apparatus of any one of the preceding clauses, wherein the trained machine learning model is trained with supervised training, for example using (labeled) data and/or augmented data.
Clause 35. The apparatus of any one of the preceding clauses, wherein the trained neural network model is trained with a snapshot, the snapshot comprising a foundational model.
Clause 36. The apparatus of any one of the preceding clauses, further comprising preprocessing the input data, for example the IMU data, by normalizing, scaling, or filtering, for example to enhance model accuracy.
Clause 37. The apparatus of any one of the preceding clauses, further comprising post-processing the output of the neural network model by applying thresholding to classify the input data into distinct categories.
Clause 38. The apparatus of any one of the preceding clauses, wherein the neural network model is trained using transfer learning with a pre-trained model as a base.
Clause 39. The apparatus of any one of the preceding clauses, wherein the neural network model is configured to achieve an accuracy of at least 95% on a validation dataset.
Clause 40. The apparatus of any one of the preceding clauses, wherein the neural network model is trained with a learning rate of 0.0001 to 0.01, or 1e-5 to 1e-4.
Clause 41. The apparatus of any one of the preceding clauses, wherein the neural network model is trained with a batch size of 2 to 32, or 64 to 256.
Clause 42. The apparatus of any one of the preceding clauses, wherein the neural network model is executed on a distributed computing system to accelerate processing speed.
Clause 43. A method for classifying user gestures, the method comprising: measuring, by a wearable IMU (104) configured to measure a user (20), a user movement, providing data comprising movement information related to the user movement to a gesture classifier,
   classifying, using the gesture classifier, based at least in part on the movement information, the movement as a candidate gesture, wherein the candidate gesture is at least one of: a left directional movement, a right directional movement, a up directional movement, or a down directional movement, and
   outputting the classified candidate gesture.
Clause 44. The method of clause 43, wherein the wearable IMU is arranged on the user's wrist.
Clause 45. The method of clause 43 or clause 44, wherein the wearable IMU is attached to the mounting component, wherein the mounting component is a wrist-wearable component such a strap.
Clause 46. The method of clause 43, wherein the wearable IMU is arranged on the user's finger.
Clause 47. The method of clause 43 or clause 46, wherein the wearable IMU is attached to a mounting component, wherein the mounting component is a finger-wearable component such as a ring.
Clause 48. The method of any one of clauses 43 - 47, wherein the method comprises using a wearable apparatus (100) comprising
   the wearable IMU (104) configured to measure a user (20),
   a mounting component (105),
   a controller (203) comprising a processing core (701), at least one memory (707) including computer program code;
   the at least one memory (707) and the computer program code being configured to, with the at least one processing core (701), cause the apparatus (100) at least to perform the measuring.
Clause 49. The method of any one of clauses 43 - 48, wherein the controller is configured to execute a low level model, the low level model configured to activate the gesture classification when the low level model detects the user movement is being performed.
Clause 50. The method of any one of clauses 43 - 49, wherein the controller is configured to activate the gesture classification responsive to at least one of the following: a user voice command, a user wake gesture, a UI event (for example a phone notification), or shaking the device.
Clause 51. The method of any one of clauses 43 - 50, wherein an external apparatus comprises the gesture classifier, wherein the controller is configured to transmit the movement information to the external apparatus, and wherein optionally the controller is configured to receive the classified candidate gesture in return.
Clause 52. The method of any one of clauses 43 - 51, wherein the controller comprises the gesture classifier.
Clause 53. The method of any one of clauses 43 - 52, wherein the classified candidate gesture is provided as at least one of: a confidence value, a ranked list of probabilities corresponding to candidate gestures.
Clause 54. The method of any one of clauses 43 - 53, wherein the gesture classifier comprises a trained machine learning model, for example a trained neural network, wherein the trained machine learning model is trained to classify gestures as candidate gestures based on movement information.
Clause 55. The method of any one of clauses 43 - 54, wherein the gesture classifier comprises a rule-based model, wherein the rule-based model is trained to classify gestures as candidate gestures based on movement information according to rules, the rules being related to signal characteristics, for example signal intensity, of the movement information.
Clause 56. The method of any one of clauses 43 - 55, wherein an external apparatus comprises a gesture interpreter, wherein the controller is configured to transmit the classified candidate gesture to the external apparatus.
Clause 57. The method of any one of clauses 43 - 56, wherein the controller comprises a gesture interpreter, wherein the candidate gesture is provided to the gesture interpreter as an input.
Clause 58. The method of any one of clauses 43 - 57, wherein the gesture interpreter is configured to adjust the determination based on at least one of an affordance profile and/or a user intent estimate.
Clause 59. The method of any one of clauses 43 - 58, wherein the output of the gesture classifier must satisfy a threshold to be accepted, by the gesture interpreter, as an interpreted gesture.
Clause 60. The method of any one of clauses 43 - 59, wherein the threshold is adjusted based on at least one of an affordance profile and/or a user intent estimate.
Clause 61. The method of any one of clauses 43 - 60, wherein the movement information comprises at least one data signal within a time window, and wherein the classifier is configured to classify the gesture based on the signal characteristics within said time window.
Clause 62. The method of any one of clauses 43 - 61, wherein the classifier is configured to classify the gesture and optionally any subsequent gestures based on at least one signal intensity within said time window.
Clause 63. The method of any one of clauses 43 - 62, wherein the time window is from 50 milliseconds to 500 milliseconds, in particular 400 milliseconds.
Clause 64. The method of any one of clauses 43 - 63, wherein the IMU signal frequency is from 50 Hz to 150 Hz, for example 100 Hz.
Clause 65. The method of any one of clauses 43 - 64, wherein the controller is configured to transmit a UI command based on the output gesture, wherein the UI command may be at least one of: a directional movement, adjusting a slider, raising or lowering volume, and/or media controls.
Clause 66. The method of any one of clauses 43 - 65, wherein the movement information comprises contact between the surface of the thumb, for example the distal and/or medial phalanx of the thumb, and the surface of the finger (for example, the distal, medial and/or proximal phalanx of the finger).
Clause 67. The method of any one of clauses 43 - 66, wherein the gesture further comprises extended movements, such as finger tap movements (tapping the finger tip and thumb tip together), finger press movements (pressing the thumb tip to the finger surface) and/or combination swipe and/or finger tap and/or finger press.
Clause 68. The method of any one of clauses 43 - 67, wherein the controller is further configured to use a neural network, for example a recurrent neural network, to capture gesture history and improve gesture detection.
Clause 69. The method of any one of clauses 43 - 68, wherein the controller is further configured to perform onboard processing, said onboard processing comprising the preprocessing, the gesture classification and the gesture interpretation.
Clause 70. The method of any one of clauses 43 - 69, wherein the IMU is a six-axis IMU comprising at least one of: magnetometer, gyroscope, or accelerometer.
Clause 71. The method of any one of clauses 43 - 70, wherein the apparatus comprises at least one optical sensor, wherein the apparatus is configured to provide data from the optical sensor to the gesture classifier, wherein the classification of the gesture is performed based at least in part on the provided optical sensor data.
Clause 72. The method of any one of clauses 43 - 71, wherein a single housing comprises the controller and the IMU.
Clause 73. The method of any one of clauses 43 - 72, wherein the controller is a smart phone and/or wherein a smart phone comprises the controller.
Clause 74. The method of any one of clauses 43 - 73, wherein the computed motion features comprise temporal and/or frequency domain features, for example time-domain metrics comprising at least one of peak acceleration, velocity magnitude, and duration of motion events; and/or frequency-domain analysis comprising identification of periodic and/or oscillatory motion patterns, wherein the patterns may be associated with specific predetermined gestures.
Clause 75. The method of any one of clauses 43 - 74, wherein the neural network model is a convolutional neural network comprising multiple convolutional layers for feature extraction.
Clause 76. The method of any one of clauses 43 - 75, wherein the trained neural network model is trained with supervised training, for example using (labeled) data and/or augmented data.
Clause 77. The method of any one of clauses 43 - 76, wherein the trained neural network model is trained with a snapshot, the snapshot comprising a foundational model.
Clause 78. The method of any one of clauses 43 - 77, further comprising preprocessing the input data, for example the IMU data, by normalizing, scaling, or filtering, for example to enhance model accuracy.
Clause 79. The method of any one of clauses 43 - 78, further comprising post-processing the output of the neural network model by applying thresholding to classify the input data into distinct categories.
Clause 80. The method of any one of clauses 43 - 79, wherein the neural network model is trained using transfer learning with a pre-trained model as a base.
Clause 81. The method of any one of clauses 43 - 80, wherein the neural network model is configured to achieve an accuracy of at least 95% on a validation dataset.
Clause 82. The method of any one of clauses 43 - 81, wherein the neural network model is trained with a learning rate of 0.0001 to 0.01, or 1e-5 to 1e-4.
Clause 83. The method of any one of clauses 43 - 82, wherein the neural network model is trained with a batch size of 2 to 32, or 64 to 256.
Clause 84. The method of any one of clauses 43 - 83, wherein the neural network model is executed on a distributed computing system to accelerate processing speed.
Clause 85. A method for training a machine learning model configured to classify a measured movement as a candidate gesture based at least in part on movement information related to the measured movement, wherein the candidate gesture is at least one of: a left directional movement, a right directional movement, a up directional movement, or a down directional movement, wherein the training comprises supervised training, for example using (labeled) data and/or augmented data,
   wherein the labeled data comprises movement information based on IMU data measured from at least one user performing a gesture, wherein the measured movement comprises contact between the surface of the thumb and the surface of the finger.
Clause 86. The method of clause 85, wherein the IMU data is from an IMU arranged on the wrist area of a user.
Clause 87. The method of clause 85, wherein the IMU data is from an IMU arranged on the finger area of a user.
Clause 88. A trained machine learning model configured to classify a measured movement as a candidate gesture based at least in part on movement information related to the measured movement,
   wherein the candidate gesture is at least one of: a left directional movement, a right directional movement, a up directional movement, or a down directional movement, wherein the training comprises supervised training, for example using (labeled) data and/or augmented data,
   wherein the labeled data comprises movement information based on IMU data measured from at least one user performing a gesture, wherein the movement information comprises contact between the surface of the thumb and the surface of the finger.
Clause 89. The method of clause 88, wherein the IMU data is from an IMU arranged on the wrist area of a user.
Clause 90. The method of clause 88, wherein the IMU data is from an IMU arranged on the finger area of a user.
Clause 91. A non-transitory computer readable medium having stored thereon a set of computer readable instructions that, when executed by at least one processor, cause an apparatus to at least:
   receive data from the wearable IMU (104), the data comprising movement information related to a user movement, the user movement comprising a relative motion between the user's thumb and a finger of the user, wherein during at least part of the movement the surface of the thumb contacts the surface of the finger,
   classify, using a gesture classifier and based at least in part on the movement information, the movement as a candidate gesture, wherein the candidate gesture is at least one of: a left directional movement, a right directional movement, a up directional movement, or a down directional movement, and
   output the classified candidate gesture.
Clause 92. The non-transitory computer readable medium of clause 91, wherein the IMU data is from a wearable IMU arranged on the user's wrist.
Clause 93. The non-transitory computer readable medium of clause 91 or clause 92, wherein the apparatus is configured to execute a low level model, the low level model configured to activate the gesture classification when the low level model detects the user movement is being performed.
Clause 94. The non-transitory computer readable medium of any one of clauses 91 to 93, wherein the apparatus comprises the gesture classifier.
Clause 95. The non-transitory computer readable medium of any one of clauses 91 to 94, wherein the gesture classifier comprises a trained machine learning model, for example a trained neural network, wherein the trained machine learning model is trained to classify gestures as candidate gestures based on movement information.
Clause 96. The non-transitory computer readable medium of any one of clauses 91 to 95, wherein the controller comprises a gesture interpreter, wherein the candidate gesture is provided to the gesture interpreter as an input.
Clause 97. The non-transitory computer readable medium of any one of clauses 91 to 96, wherein the movement information comprises at least one data signal within a time window, and wherein the classifier is configured to classify the gesture based on the signal characteristics within said time window.
Clause 98. The non-transitory computer readable medium of any one of clauses 91 to 97, wherein the controller is configured to transmit a UI command based on the output gesture, wherein the UI command may be at least one of: a directional movement, adjusting a slider, raising or lowering volume, and/or media controls.
Clause 99. The non-transitory computer readable medium of any one of clauses 91 to 98, wherein the classifier is configured to classify the gesture and optionally any subsequent gestures based on at least one signal intensity within said time window.
Clause 100. A computer program configured to cause a method in accordance with at least one of clauses 43 - 84 or clauses 85 - 90 to be performed.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

For the purposes of the present disclosure, the phrases "A or B" and "A and/or B" means (A), (B), or (A and B). For the purposes of the present disclosure, the phrase "A, B, and/or C" means (A), (B), (C), (A and B), (A and C), (B and C), or (A, B, and C).

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in controlling devices, for example media devices.

## Claims

1. A wearable apparatus comprising
- a wearable IMU configured to measure a user (20),
- a mounting component,
- a controller (comprising a processing core, at least one memory including computer program code;
the at least one memory and the computer program code being configured to, with the at least one processing core, cause the apparatus at least to:
- receive data from the wearable IMU, the data comprising movement information related to a user movement, the user movement comprising a relative motion between the user's thumb (27) and a finger (29) of the user, wherein during at least part of the movement the surface of the thumb contacts the surface of the finger,
- classify, using a gesture classifier and based at least in part on the movement information, the movement as a candidate gesture, wherein the candidate gesture is at least one of: a left directional movement, a right directional movement, a up directional movement, or a down directional movement, and
- output the classified candidate gesture.

2. The apparatus of claim 1, wherein the wearable IMU is arranged on the user's wrist.

3. The apparatus of claim 1 or claim 2, wherein the wearable IMU is attached to the mounting component, wherein the mounting component is a wrist-wearable component such a strap.

4. The apparatus of claim 1, wherein the wearable IMU is arranged on the user's finger.

5. The apparatus of claim 1 or claim 4, wherein the wearable IMU is attached to a mounting component, wherein the mounting component is a finger-wearable component such as a ring.

6. The apparatus of any one of the preceding claims, wherein the controller is configured to execute a low level model, the low level model configured to activate the gesture classification when the low level model detects the user movement is being performed.

7. The apparatus of any one of the preceding claims, wherein the controller is configured to activate the gesture classification responsive to at least one of the following: a user voice command, a user wake gesture, a UI event (for example a phone notification), or shaking the device.

8. The apparatus of any one of the preceding claims, wherein an external apparatus comprises the gesture classifier, wherein the controller is configured to transmit the movement information to the external apparatus, and wherein optionally the controller is configured to receive the classified candidate gesture in return.

9. The apparatus of any one of the preceding claims, wherein the controller comprises the gesture classifier.

10. A method for classifying user gestures, the method comprising:
- measuring, by a wearable IMU (104) configured to measure a user (20), a user movement,
- providing data comprising movement information related to the user movement to a gesture classifier,
- classifying, using the gesture classifier, based at least in part on the movement information, the movement as a candidate gesture, wherein the candidate gesture is at least one of: a left directional movement, a right directional movement, a up directional movement, or a down directional movement, and
- outputting the classified candidate gesture.

11. The method of claim 10, wherein the wearable IMU is arranged on the user's wrist.

12. The method of claim 10, wherein the wearable IMU is arranged on the user's finger.

13. The method of any one of claims 10 - 12, wherein the method comprises using a wearable apparatus (100) comprising
- the wearable IMU (104) configured to measure a user (20),
- a mounting component (105),
- a controller (203) comprising a processing core (701), at least one memory (707) including computer program code;
the at least one memory (707) and the computer program code being configured to, with the at least one processing core (701), cause the apparatus (100) at least to perform the measuring.

14. The method of any one of claims 10 - 13, wherein the controller is configured to execute a low level model, the low level model configured to activate the gesture classification when the low level model detects the user movement is being performed.

15. The method of any one of claims 10 - 14, wherein the controller comprises the gesture classifier.

16. A non-transitory computer readable medium having stored thereon a set of computer readable instructions that, when executed by at least one processor, cause an apparatus to at least:
- receive data from the wearable IMU (104), the data comprising movement information related to a user movement, the user movement comprising a relative motion between the user's thumb and a finger of the user, wherein during at least part of the movement the surface of the thumb contacts the surface of the finger,
- classify, using a gesture classifier and based at least in part on the movement information, the movement as a candidate gesture, wherein the candidate gesture is at least one of: a left directional movement, a right directional movement, a up directional movement, or a down directional movement, and
- output the classified candidate gesture.
